# EUROPÄISCHE PATENTSCHRIFT

(11) **EP 1 518 437 B1**
(45) Veröffentlichungstag und Bekanntmachung des Hinweises auf die Patenterteilung: **29.07.2009**
(21) Anmeldenummer: 03761424.5
(22) Anmeldetag: 23.06.2003
(51) Int. Cl.: H04W 4/06

(54) **VERFAHREN ZUR ÜBERTRAGUNG MINDESTENS EINER GRUPPENNACHRICHT, ZUGEHÖRIGE NETZWERKKONTROLLEINHEIT SOWIE FUNKKOMMUNIKATIONSGERÄT**
METHOD FOR THE TRANSMISSION OF AT LEAST ONE GROUP MESSAGE, CORRESPONDING NETWORK CONTROL UNIT AND RADIO COMMUNICATION DEVICE
PROCEDE POUR TRANSMETTRE AU MOINS UN MESSAGE GROUPE, UNITE DE COMMANDE RESEAU CORRESPONDANTE ET DISPOSITIF DE COMMUNICATION RADIO

(30) Priorität: 28.06.2002 DE 10229056
(43) Veröffentlichungstag der Anmeldung: 30.03.2005
(73) Patentinhaber: SIEMENS AKTIENGESELLSCHAFT, 80333 München (DE)
(72) Erfinder: BECKMANN, Mark, 38124 Braunschweig (DE); ECKERT, Michael, 38122 Braunschweig (DE); SCHWAGMANN, Norbert, 38102 Braunschweig (DE)
(86) Internationale Anmeldenummer: PCT/DE2003/002082
(87) Internationale Veröffentlichungsnummer: WO 2004/004392

(56) Entgegenhaltungen:
- DE-A- 10 064 107
- US-B1- 6 385 461

## Beschreibung

Die Erfindung betrifft ein Verfahren zur Übertragung mindestens einer Gruppennachricht gemäß dem Oberbegriff des Anspruchs 1, zugehörige Netzwerkkontrolleinheit gemäß dem Oberbegriff des Anspruchs 9 sowie Funkkommunikationsgerät gemäß dem Oberbegriff des Anspruchs 10.

Bei vielen in modernen Mobilfunksystemen angebotenen Diensten und Anwendungen, wie beispielsweise News-Groups, Video-Konferenzen, Video-On-Demand, verteile Anwendungen usw., besteht die Notwendigkeit, Nachrichten nicht nur zu einem, sondern zu zwei und mehreren Mobilfunkteilnehmern zu übertragen.

Prinzipiell ist es möglich hierzu bei der Übertragung der Nachrichten zu den verschiedenen Teilnehmern, jedem Empfänger eine Kopie der Daten zuzusenden. Diese Technik ist zwar einfach zu implementieren, sie benötigt jedoch, insbesondere für große Gruppen, eine sehr hohe-Bandbreite, da Nachricht über eine Anzahl N von Einzelverbindungen (Unicast-Verbindungen) übertragen und dabei mehrfach über gemeinsame Verbindungswege gesendet wird, wobei mit N die Anzahl der Empfänger der Nachricht bestimmt ist.

Daher kommt in modernen Mobilfunksystemen eine sogenannte Punkt-zu-Mehrpunkt Übertragung (Multicast-Übertragung) zum Einsatz, welche sich dadurch auszeichnet, dass verschiedene Teilnehmer, denen dieselbe Nachricht übermittelt werden soll, zu einer Gruppe (Multicast Gruppe) zusammengefasst, wobei dieser Gruppe eine Adresse (Multicast-Adresse) zugeordnet wird, so dass zu übertragende Daten nur einmal an diese Multicast-Adresse gerichtet und im Idealfall nur einmal über gemeinsame Verbindungswege vom Sender zu den Empfängern gesendet werden. Der Sender muss hierbei keine Kenntnis über die Anzahl der sich hinter der Multicast-Adresse verbergenden Empfänger haben. Um Nachrichten einer bestimmten Multicast Gruppe empfangen zu können, muss sich ein Teilnehmer lediglich zu dieser Multicast Gruppe einschreiben.

Als Alternative hierzu kommt auch ein als Broadcast bezeichnetes Verfahren zum Einsatz, bei dem Mitteilungen an alle Teilnehmer innerhalb eines regionalen Gebietes versendet werden, wobei dieses Gebiet, in der die Broadcast-Nachrichten ausgesendet werden, als Broadcast Area bezeichnet und die Größe der Broadcast Area vom Netzbetreiber bestimmt wird. Auch bei diesem Verfahren wird die Nachricht dabei im Idealfall nur einmal gesendet. Nachteilig ist hierbei jedoch, dass bei diesem Verfahren stets alle Teilnehmer innerhalb der Broadcast Area die Möglichkeit haben, Broadcast-Nachrichten zu lesen.

Zum leichteren Verständnis der Problematik wird im Folgenden beispielhaft auf einzelne Komponenten Architektur eines UMTS-Mobilfunknetzes eingegangen, insbesondere auf die hieraus bekannten unterschiedlichen Arten von Kanälen, die als Schnittstelle zwischen verschiedenen gemäß OSI-Referenzmodell vorgesehen Schichten (Layer) und Protokollen des sog. Protokollstapels genutzt werden:

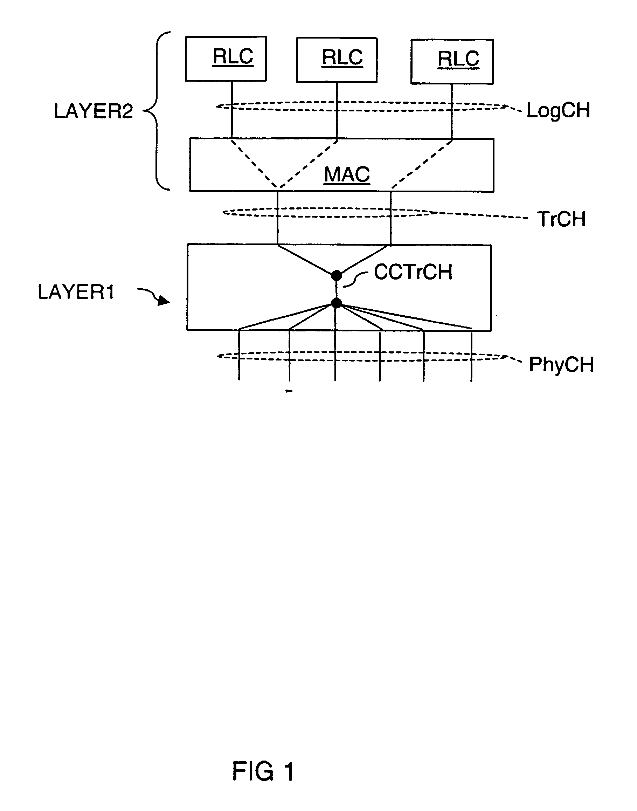

In Figur 1 sind die Schnittstellen zwischen einer gemäß OSI-Referenzmodell vorgesehenen Verbindungsschicht (Data Link Layer) LAYER2, die sich in ein Protokoll für ein Medienzugriffskontrolle ("Medium Access Control") MAC sowie ein Protokoll zur Unterstützung einer Segmentierung und Rücktransport für Nutz- und Signalisierungsdaten (Radio Link Control) RLC eingeteilt, und der Bitübertragungsschicht (Physikalische Schicht, Physical Layer) LAYER1 dargestellt.
Zwischen RLC und MAC werden Daten auf logischen Kanälen übertragen, woraufhin im MAC die logische Kanäle LogCH nach bestimmten Regeln auf Transportkanäle (Transport Channel) TrCH abgebildet werden, wobei es auch möglich ist, dass mehrere logische Kanäle LogCH auf einen Transportkanal TrCh durch Multiplexen abgebildet werden.

Logische Kanäle LogCH, die auf den gleichen Transportkanal TrCH abgebildet werden müssen gleiche bzw. ähnliche Anforderungen an die Übertragungsqualität bzw. Dienstgüte ("QoS", Quality of Service) erfüllen.

Daher werden in der Bitübertragungsschicht LAYER1 je Transportkanal TrCH entsprechende Schritte durchgeführt, wie beispielsweise ein Anhängen von sog. CRC-Blöcken, mit deren Hilfe Übertragungsfehler erkannt werden können, sowie die Kanalkodierung, mit deren Hilfe auftretende Fehler korrigiert werden können.

Nach Durchführung dieser Schritte für jeden der Transportkanäle TrCH, werden innerhalb der Bitübertragungsschicht LAYER 1 bestimmte Transportkanäle TrCH auf einem sogenannten "Coded Composite Transport Channel" CCTrCH gemultiplext. Dieser Coded Composite Transport Channel CCTrCH wird dann wiederum auf einen oder mehrere physikalische Kanäle PhyCH abgebildet und über eine gemäß UMTS definierte Luftschnittstelle übertragen.

Auf den Transportkanälen TrCH werden Daten in Form sogenannter Transport Blocks (TB) übertragen. Dabei können mehrere TBs innerhalb eines bestimmten Zeitintervalls (Transmission Time Intervall, TTI) gleichzeitig in Form eines sog. Transport Block Sets (TBS) übertragen werden.

Die Parameter, wie die Größe eines Transportblocks, die Anzahl der Transportblöcke, die je Transport Block Set übertragen werden, die Dauer eines Zeitintervalls ist sowie weitere Parameter, werden durch ein sogenanntes Transport Format (TF) angegeben. Die Menge aller Transport Formate, die ein Transportkanal TrCH nutzen kann, werden wiederum durch ein Transport Format Set (TFS) angegeben. Um ein bestimmtes Transport Format innerhalb eines Transport Format Sets zu identifizieren, wird ein sog. Transport Format Identifier (TFI) angegeben.

Transportblöcke verschiedener Transportkanäle TrCH, die während eines Zeitintervalls auf den selben Coded Composite Transportkanal CCTrCH abgebildet werden, müssen bestimmte Voraussetzungen erfüllen, d.h. nicht jede Kombination von Transportblöcken ist erlaubt.

Erlaubte Kombinationen von Transportblöcken verschiedener Transportkanäle TrCH, die während eines Zeitintervalls auf den selben Coded Composite Transportkanal abgebildet werden dürfen, werden durch sogenannte Transport Format Combinations (TFC) angegeben. Die Menge aller erlaubten Transport Format Combinations wird wiederum durch ein sog. Transport Format Combination Set (TFCS) angegeben.

Um bestimmte Transport Format Combinations innerhalb eines Transport Format Combination Sets zu identifizieren, wird ein sog. Transport Format Combination Indicator (TFCI) angegeben. Dadurch wird erreicht, dass verwendete Transport Format Combinations, welche von Zeitintervall zu Zeitintervall wechseln kann, nicht jedes mal explizit angegeben und zum Mobilfunkgerät übertragen werden muss, sondern durch einen 'Zeiger' - den Transport Format Combination Indicator - auf eine Liste von Transport Format Combinations in sehr effizienter Weise referenziert werden kann.

Eine weitere Effizienzsteigerung wird dadurch erreicht, dass bei der Konfiguration der Transport Format Combinations, diese nicht explizit übertragen werden, sondern eine Calculated Transport Format Combination (CTFC) berechnet wird, aus der sich dann im Mobilfunkgerät die Transport Format Identifier zurückrechnen lassen, welche auf die entsprechenden TFs innerhalb der Transport Format Sets der einzelnen Transportkanäle TrCH zeigen und sich somit wieder die gewünschte Transport Format Combination ergibt.

Damit ein Mobilfunkgerät Daten, die es über seine physikalischen Kanäle empfängt, über Transportkanäle TrCH an höhere Protokollschichten weitergeben kann, muss es die Transport Formate der einzelnen Transportkanäle TrCH kennen. Sind mehrere Transportkanäle TrCH auf einen Coded Composite Transportkanal abgebildet, so muss es die Transport Formate jedes einzelnen Transportkanals TrCH kennen, um die Datenpakete mit unterschiedlichen Eigenschaften (entsprechend den unterschiedlichen Transport Formaten) richtig auf die einzelnen Transportkanäle TrCH aufteilen kann. Selbst wenn sich ein Mobilfunkgerät beispielsweise nur für die Daten von einem von acht Transportkanäle TrCH "interessiert", muss es die Transport Formate von allen acht Transportkanäle TrCH kennen.

Nach dem Stand der Technik werden in UMTS-Netzwerken, wie sie in Dokument DE10064107 genutzt werden, Transport Format Combination Indicator TFCI Werte teilnehmerspezifisch bestimmt und versendet.

Ein Mobilfunkgerät, das nur einer Multicast Gruppe zugehört und dementsprechend die Daten über nur einen Transportkanal TrCH erhält, müsste, wenn bspw. insgesamt 8 Transportkanäle TrCH auf den CCTrCH abgebildet sind, die TFS von insgesamt 8 Transportkanälen TrCH anstatt nur die eines Transportkanals TrCH kennen.

Diese Technik wäre zwar einfach zu implementieren, hätte aber den großen Nachteil, das sie zum einen ein unnötig hoher Speicherbedarf im Mobilfunkgerät benötigt wird und zum anderen den Signalverarbeitungsaufwand im Mobilfunkgerät erhöht.

Es ist Aufgabe der vorliegenden Erfindung, die Versendung und dem Empfang von Multicast-Nachrichten in einem Mobilfunknetz, insbesondere einem solchen der sog. dritten Generation, zu einfach und ressourcenschonend zu realisieren.

Diese Aufgabe wird durch das Verfahren gemäß Anspruch 1 ausgehend von dem Oberbegriff durch dessen kennzeichnenden Merkmale gelöst, sowie durch das Funkkommunikationsgerät nach Anspruch 9 zur Durchführung des Verfahrens ausgehend vom Oberbegriff durch dessen kennzeichnenden Merkmale gelöst.

In einem UMTS-System wird die Erfindung durch ein Verfahren zur mobilfunkgerätespezifischen Konfiguration der Zuordnung von TFCI Werten zu CTFC Werten unter Berücksichtigung von für eine Empfängergruppe gemeinsamen TFCI Werten, vorteilhaft implementiert.

Bei der mobilfunkgerätespezifischen Konfiguration von TFCI Werten und zugehörigen CTFC Werten wird erfindungsgemäß berücksichtigt, dass ein bestimmter TFCI Wert für die Dauer der Übertragung der Daten, (TTI) für diese Multicast Gruppe, für alle Mobilfunkgeräte dieselbe Bedeutung hat, wobei die CTFC Werte der einzelnen Mobilfunkgeräte, die diesem TFCI Wert zugeordnet sind, unterschiedlich sein können. "Die selbe Bedeutung" heißt hierbei beispielsweise, dass alle Mobilfunkgeräte zum Zeitpunkt der Übertragung der Daten für die Multicast Gruppe auf den selben physikalischen Kanal hören und der verwendete Transportkanal das selbe TF nutzt.

Die Konfiguration von TFCI Werten und zugehörigen CTFC Werten erfolgt UE spezifisch. Das heißt jedes Mobilfunkgerät, welches zu einer MC Gruppe eingeschrieben ist, erhält, abhängig davon, zu wie vielen und welchen Multicast Gruppen es eingeschrieben ist, eine eigene Konfiguration von TFCI Werten und zugehörigen CTFC Werten, die von den Konfigurationen anderer Mobilfunkgeräte, welche zu der selben MC Gruppe gehören, unterschiedlich sein kann.

Vorteil der Erfindung ist, dass ein Mobilfunkgerät, das einer oder mehreren Multicast Gruppen zugehört, nur die TFSs der TrCHs für seine Multicast Gruppen kennen muss, nicht aber die anderer Multicast Gruppen, die über weitere TrCHs, welche auf denselben CCTrCH abgebildet werden, übertragen werden.

Besonders Vorteilhaft ist dabei, das der Signalverarbeitungsaufwand und Speicherbedarf in den Mobilfunkgeräten reduziert wird, da nicht die Daten aller TrCHs erfasst, zwischengespeichert und verarbeitet werden müssen.

Sonstige Weiterbildungen der Erfindung werden in den Unteransprüchen wiedergegeben.

Die Erfindung und ihre Weiterbildungen werden nachfolgend anhand von Zeichnungen näher erläutert.

### Es zeigen:

- Figur 1: UMTS Architektur der unteren Schichten des OSISchichtenmodells,
- Figur 2: UMTS Kanalzuordnung nach dem Stand der Technik,
- Figur 3: Momentaufnahme der Anwendung eines ersten Schritts des erfindungsgemäßen Verfahrens auf die Kanalzuordnung,
- Figur 4: erfindungsgemäße Kanalzuordnung.

Elemente mit gleicher Funktion und Wirkungsweise sind in den Figuren 1 mit 4 jeweils mit denselben Bezugszeichen versehen.

Für dieses Ausführungsbeispiel wird vereinfachend angenommen, dass sich ein erstes Funkkommunikationsgerät (Mobilfunkgeräte, User Equipment) UE1, ein zweites Funkkommunikationsgerät UE2 und ein drittes Funkkommunikationsgerät UE3 in einer Mobilfunkzelle befinden, in der Nachrichten von einer ersten Multicast Gruppe MC1,einer zweiten Multicast Gruppe MC2 und einer dritten Multicast Gruppe MC 3 angeboten werden.

Des weiteren sei angenommen, dass das erste Funkkommunikationsgerät UE1 zu der ersten Multicast Gruppe MC1 sowie der dritten Multicast Gruppe MC3 eingeschrieben ist, das zweite Funkkommunikationsgerät UE2 zur zweiten Multicast Gruppe MC2 sowie dritten Multicast Gruppe MC3 eingeschrieben und das dritte Funkkommunikationsgerät UE3 bei der ersten Multicast Gruppe MC1, der zweiten Multicast Gruppe MC2 sowie dritten Multicast Gruppe MC3 eingeschrieben ist.

Zur Übertragung von Daten einer Multicast Gruppe MC1, MC2, MC3 sollen Transportkanäle TrCH genutzt werden, die mehrere Mobilfunkgeräte gemeinsam nutzen können. Insbesondere sollen dafür Transportkanäle TrCHs gemäß UMTS vom Typ Downlink Shared Channel DSCH - *Transportkanäle vom Typ DSCH werden für unregelmäßig auftretenden Datenverkehr genutzt. Ein Mobilfunkgerät kann keinen, einen oder mehrere Transportkanäle vom Typ DSCH gleichzeitig halben. Alle DSCHs einer Mobilfunkstation werden exklusiv auf einen CCTrCH abgebildet. Die Ressource, d.h. wann über einen DSCH Daten übertragen bekommt, wird einem Mobilfunkgerät über einen, dem DSCH assoziierten dedizierten physikalischen Kanal (PDCH) zugewiesen. Dabei wird über den DPCH ein TFCI übertragen, welches unter anderem angibt, auf welchem physikalischen Kanal der DSCH als nächstes übertragen wird und welche CTFC bzw. TFs auf den TrCHs genutzt werden sollen* - genutzt werden -, die pro Zeitintervall TTI erfindungsgemäß einer Gruppe MC1, MC2, MC3 von Mobilfunkgeräten UE1, UE2, UE3 zugewiesen werden, wobei hierzu alternativ auch Transportkanäle anderen Typs zur Übertragung von Gruppennachrichten verwendet werden können.

Vorzugsweise wird genau eine Multicast Gruppe MC1, MC2, MC3 auf genau einen Transportkanal TrCH, abgebildet. Mobilfunkstationen UE1, UE2, UE3, die zu einer oder mehreren Multicast Gruppen MC1, MC2, MC3 gehören, müssen dann den entsprechenden Transportkanal TrCH empfangen. Der CCTrCH, auf den die Transportkanäle TrCHs abgebildet werden, ist daher erfindungsgemäß exklusiv den jeweiligen Multicast Gruppen MC1, MC2, MC3 zugeordnet, d.h. es können keine anderen Kanäle, wie beipielsweise DCHs, auf diesen CCTrCH abgebildet werden.

Daten der einzelnen Multicast Gruppen MC1, MC2, MC3 werden erfindungsgemäß über die zugehörigen Transportkanäle TrCH im sog. Zeitmultiplexverfahren auf den CCTrCH abgebildet werden. D.h. zu einem bestimmten Zeitpunkt werden immer jeweils nur Daten einer bestimmten Multicast Gruppe MC1, MC2, MC3 auf den CCTrCH übertragen.

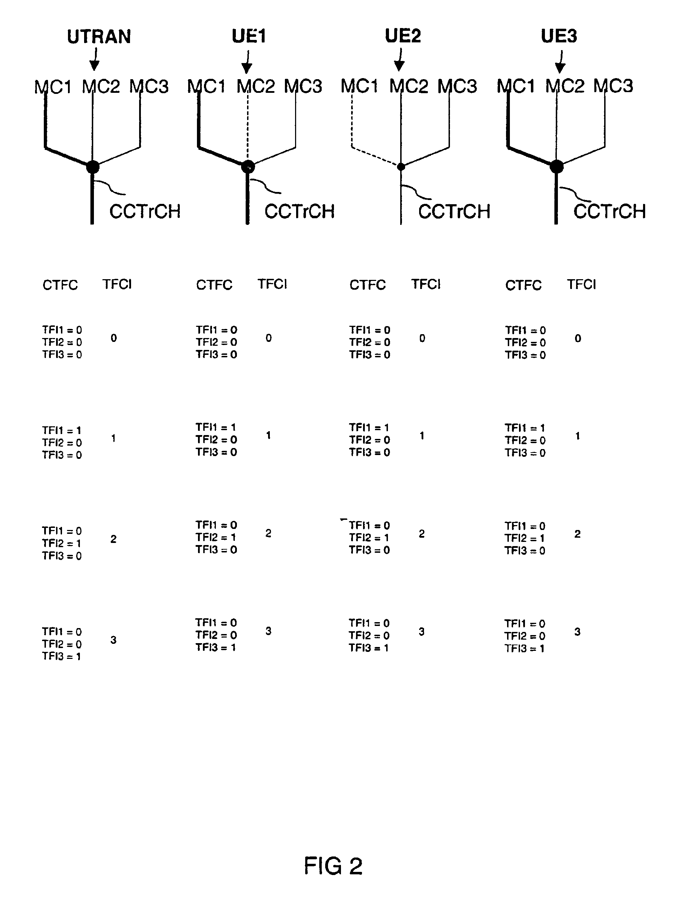

In den Figuren 2 bis 4 sind hierzu jeweils die Transportkanäle TrCH1, Trch2, TrCH3 dargestellt, die auf einen CCTrCH abgebildet werden. Daten für die erste Multicast Gruppe MC1 werden über den ersten Transportkanal TrCH1 übertragen, da gemäß dem Ausführungsbeispiel der ersten Multicast Gruppe MC1 zugeordnet ist, entsprechend werden Daten für die zweite Multicast Gruppe MC2 über den zweiten Transportkanal TrCH2 sowie Daten Daten für die dritte Multicast Gruppe MC3 über den dritten Transportkanal TrCH3 übertragen werden.

Die Transportkanäle TrCH1, TrCH2, TrCH3 der Multicast Gruppen MC, zu denen ein Mobilfunkgerät UE1, UE2, UE3 gehört, sind durchgezogen dargestellt, die Transportkanäle TrCH1, TrCH2, TrCH3 der Multicast Gruppen MC1, MC2, MC3, zu denen ein Mobilfunkgerät UE1, UE2, UE3 nicht gehört, sind gestrichelt dargestellt. Die Transportkanäle TrCH1, TrCH2, TrCh3 der Multicast Gruppen MC1, MC2, MC3, auf denen innerhalb eines betrachteten Zeitintervalls TTI Daten übertragen werden, sind durchgezogen und fett dargestellt.

Die Zuweisung der Downlink Shared Channel (DSCH) Ressource, d.h. wann auf dem DSCH Daten für eine bestimmte Multicast Gruppe MC1, MC2, MC3 übertragen werden und die Parameter für diese Übertragung, erfolgt erfindungsgemäß, insbesondere über einen zum DSCH Kanaltyp assoziierten, gemeinsamen Kanal Common Channel erfolgen, auf den alle Mobilfunkgeräte UE1, UE2, UE3, die zu einer der Multicast Gruppen MC1, MC2 MC3 eingetragen sind, hören. Auf diesem gemeinsamen Kanal wird dann, wenn es zur Übertragung der Daten einer bestimmten Multicast Gruppe MC1, MC2, MC3 kommt, ein Transport Format Combination Indicator TFCI Wert übertragen, der Auskunft über den physikalischen Kanal gibt, über den der DSCH übertragen wird, und über die zu verwendende Transport Format Combination TFC. Dafür identifiziert der Transport Format Combination Indicator TFCI Wert einen Calculated Transport Format Combination CTFC Wert in einer zuvor nach dem erfindungsgemäßen Verfahren konfigurierten Tabelle. Aus diesem Calculated Transport Format Combination CTFC Wert kann dann die zu verwendende Transport Format Combination TFC zurückgerechnet werden.

Die Tabellen der Figuren 2 bis 4 geben die Zuordnung von Transport Format Combination Indicator TFCI zu Calculated Transport Format Combination CTFC an, wobei sich die Calculated Transport Format Combination CTFC Werte durch einen ersten Transport Format Identifier Wert TFI1, eine zweiten Transport Format Identifier Wert TFI2 sowie einen dritten Transport Format Identifier TFI Wert für die entsprechenden einzelnen Transportkanäle TrCH1, TrCH2, TrCH3 ergeben.

Der erste Transport Format Identifier Wert TFI1 weist dabei auf ein Transport Format (TF) des Transport Format Sets (TFS) des ersten Transportkanals TrCH1, der zweite Transport Format Identifier Wert TFI2 weist auf ein TF des TFS vom zweiten Transportkanal TrCH2 und der dritte Transport Format Identifier Wert TFI3 weist auf ein TF des TFS vom dritten Transportkanal TrCH3, wobei das Ausführungsbeispiel der Einfachheit und Übersichtlichkeit der Tabellen halber angenommen wird, dass die Transport Format Sets der einzelnen Transportkanäle TrCH1, TrCH2, TrCh3 lediglich aus den TF-Werten "0" und "1" bestehen.

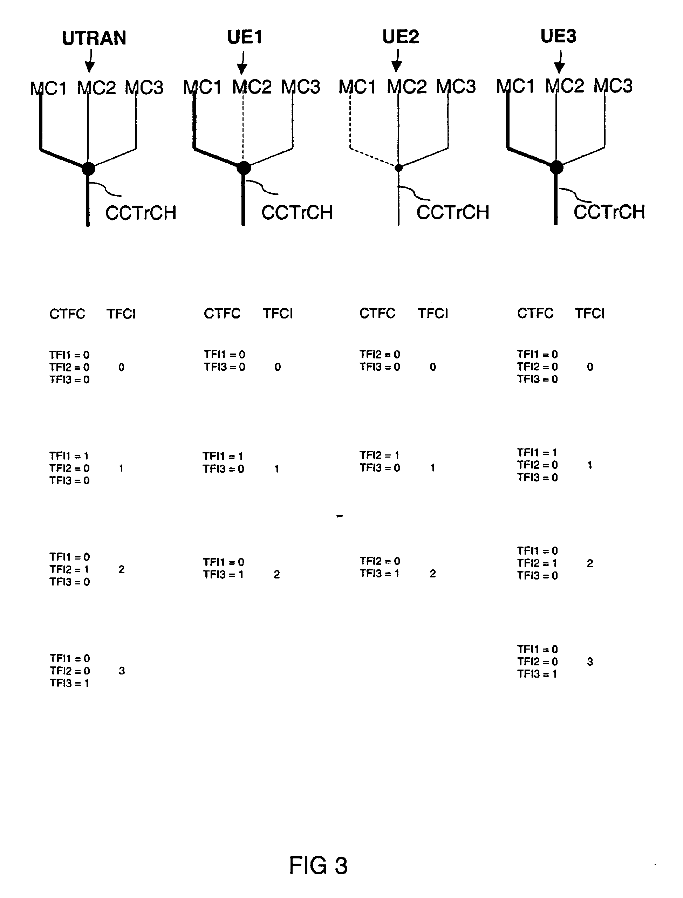

Zum Besseren Verständnis der Erfindung ist in Figur 3 dargestellt, wie eine mobilfunkgerätespezifische Konfiguration von Transport Format Combination Indicator Wert TFCI Werten und zugehörigen Calculated Transport Format Combination CTFC Werten bei Anwendung nach dem Stand der Technik aussehen würde. Dort wurde bei der Konfiguration nicht darauf geachtet, dass ein bestimmter Transport Format Identifier TFCI Wert für den Zeitpunkt der Übertragung der Daten (TTI) einer bestimmten Multicast Gruppe MC1, MC2, MC3 für alle Mobilfunkgeräte UE1, UE2, UE3 das gleiche bedeuten soll.

Sollen nun Daten für die erste Multicast Gruppe MC1 übertragen werden, so wählt das Netzwerk UTRAN dafür den Transport Format Combination Indicator TFCI Wert 1. Für das erste Mobilfunkgerät und das dritte Mobilfunkgerät UE1 und UE3 ist dies in Ordnung und sie würden ihre Daten richtig empfangen. Das zweite Mobilfunkgerät UE2 würde jedoch ebenfalls auf den physikalischen Kanal hören und Daten für die zweite Multicast Gruppe MC2 auf dem zweiten Transportkanal TrCH2 erwarten, auf dem aber keine übertragen werden.

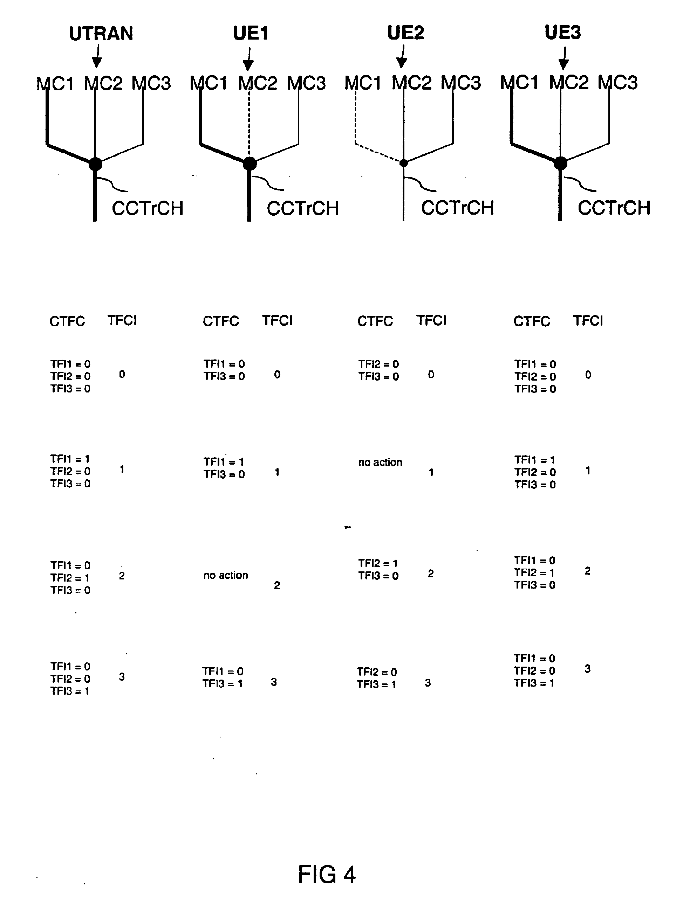

Um nun die Konfiguration von Transport Format Combination Indicator TFCI Werten und zugehörigen Calculated Transport Format Combination CTFC Werten so zu planen, dass zum Zeitpunkt der Übertragung der Daten einer bestimmten Multicast Gruppe MC1, MC2, MC3, der für alle Mobilfunkgeräte UE1, UE2, UE3 gemeinsam übertragene Transport Format Combination Indicator TFCI Wert auch für alle Mobilfunkgeräte UE1, UE2, UE3 die selbe Bedeutung hat, wird nun erfindungsgemäß im Netzwerk UTRAN die Konfigurationen der einzelnen Mobilfunkgeräte UE1, UE2, UE3 in Abhängigkeit voneinander bestimmt, wie in Figur 4 ist beispielhaft dargestellt ist..

Hierbei sind den Transport Format Combination Indicator TFCI Werten, mit denen ein Mobilfunkgerät UE1, UE2, UE3 ,nichts anfangen' kann, weil es nicht zu der entsprechenden Multicast Gruppe MC1, MC2, MC3 Gruppe eingeschrieben ist, keine Calculated Transport Format Combination CTFC Werte zugeordnet. Stattdessen ist diesen Transport Format Combination Indicator TFCI Werten der Befehl "no action" (keine Aktion) zugeordnet. Ein Mobilfunkgerät UE1, UE2, UE3, das einen entsprechenden Transport Format Combination Indicator TFCI Wert empfängt, wird diesen ignorieren und für das entsprechende Zeitintervall auf keinen weiteren physikalischen Kanal hören.

An Stelle des Befehls "no action" kann alternativ den Transport Format Combination Indicator TFCI Werten, mit denen ein Mobilfunkgerät UE1, UE2, UE3 "nichts anfangen" kann, auch standardmäßig ein Calculated Transport Format Combination CTFC Wert mit den Transport Format Identifier TFI Werten 0 für alle TrCHs zugeordnet werden. Ein Mobilfunkgerät UE1, UE2, UE3, das diesen Transport Format Combination Indicator TFCI Wert empfängt, würde dann zwar auf einen entsprechenden physikalischen Kanal hören, die empfangenen Daten aber nicht an höhere Protokollschichten weiterleiten.

Alternativ könnte man bei der Konfiguration von Transport Format Combination Indicator TFCI Werten und zugehörigen CTFC Werten auch eine explizite Liste von Transport Format Combination Indicator TFCI Werten angeben. Im Beispiel aus Figur 4 wäre das für UE1 der Transport Format Combination Indicator TFCI 0,1 und 3 und für UE2 der Transport Format Combination Indicator TFCI 0,2,3. Ein Mobilfunkgerät UE1, UE2, UE3, das einen Transport Format Combination Indicator TFCI Wert empfängt, der ihm nicht in der Liste angegeben wurde, würde diesen daraufhin ignorieren und für dieses Zeitintervall keine weiteren Aktionen, wie bspw. das Lesen physikalischer Kanäle, ausführen.

Man sieht in Figur 4, dass die Tabellen für das erste Mobilfunkgerät UE1 und das zweite Mobilfunkgerät UE2, die nur 2 Transportkanäle TrCH konfiguriert haben, kürzer sind als die Tabelle für das dritte Mobilfunkgerät UE3, das alle drei Transportkanäle TrCH konfiguriert hat. Noch deutlicher wird dies, wenn man ein Mobilfunkgerät UE1, UE2, UE3 mit nur einem Transportkanal TrCH (zugehörig zu nur einer Multicast Gruppe MC1, MC2, MC3) mit einem Mobilfunkgerät UE1, UE2, UE3 vergleicht, das z.B. 8 Transportkanäle TrCH besitzt (zugehörig zu 8 Multicast Gruppen). Der Übersichtlichkeit wegen, ist eine derartiges Beispiel jedoch nicht dargestellt.

Der erfindungswesentliche Kern lässt sich daher am Beispiel des UMTS-Systems folgender Weise zusammenfassend darstellen:
Mehrere Multicast Services (oder Gruppen) werden auf einen CCTrCH gemultiplext, wobei jede Gruppe über einen eigenen Transport Kanal (TrCH) übertragen wird und das Multiplexen zeitlich getrennt erfolgt, das heißt in einem Zeitabschnitt TTI lediglich eine Multicast Gruppe übertragen wird, wobei die Signalisierung welche Gruppe übertragen wird, über das TFCI erfolgt, welches über einen gemeinsamen Kanal übertragen wird.
Damit eine Mobilfunkstation erkennen kann, ob eine Übertragung in einem Zeitabschnitt Daten für eine Multicast Gruppe überträgt, welche die Mobilfunkstation empfangen möchte, gibt es zwei Möglichkeiten:
   Die CTFCs werden unter Berücksichtigung aller Transport Formate (TFs) aller Transport Kanäle (TrCHs) berechnet und durchnummeriert. Jede Nummer entspricht dabei einem Identifikator (TFCI), wobei den Mobilfunkstationen nur die CTFCs mitgeteilt werden, bei denen Daten einer Multicast Gruppe auf einem Transportkanal übertragen werden, für welche sich die entsprechende Mobilfunkstation interessiert. Da die TFCIs auf einem allgemeinen Kanal übertragen werden, müssen alle die verschiedenen CTFCs einheitlich nummerieren. Hierzu werden die CTFCs explizit, d.h. unter oben genannten Berücksichtigung, nummeriert und nicht wie nach dem Stand der Technik beliebig von der Mobilfunkstation durchnummeriert. Das heißt für jeden CTFC Wert muss das Netzwerk (RNC) - d.h. zumindest eine erfindungsgemäße Netzwerkkontrolleinheit - den TFCI Wert mit an die Mobilfunkstationen senden.

Alternativ wird an die Stelle der CTFCs, welche für eine bestimmte Mobilfunkstation nicht relevant sind, eine Information, beispielsweise den Befehl "no action" oder ein bestimmter mit der gleichen Bedeutung belegter Wert (Null) eingefügt, die dies der Mobilfunkstation mitteilt. Die Mobilfunkstationen nummerieren nun die CTFC Werte unter Berücksichtigung dieser durch. Wenn eine Mobilfunkstation einen TFCI Wert auf dem allgemeinen Kanal angezeigt bekommt, dem ein CTCF Wert zugewiesen ist der "no action" entspricht, ignoriert die Mobilfunkstation diesen Wert und empfängt die entsprechenden Daten nicht.

Der Kern der Erfindung ist hierbei nicht auf das UMTS-System beschränkt, vielmehr sollen alle im Rahmen des fachmännischen Könnens möglichen Modifikationen zur Implementierung der Erfindung in vergleichbaren System umfassen.

## Patentansprüche

1. Verfahren zur Übertragung von mindestens einer Gruppennachricht an mindestens eine Gruppe (MC1. MC2, MC3) von ein oder mehreren Funkkommunikationsgeräten (UE1, UE2, UE3) in mindestens einer Funkzelle eines UMTS- Funkkommunikationsnetzwerks, bei dem in der Zugriffsschicht- Schicht (MAC) logische Kanäle auf Transportkanäle (TrCH) abgebildet werden, über die in Transportsets (TBS) zusammengefasste Transportblocks (TB) übertragen werden, wobei die Transportblocksets (TBS) durch das Transportformat (TF) charakterisiert sind und durch Transportformat- Indikatoren (TFI) identifiziert werden, und bei dem in der physikalischen Schicht in Zeitintervallen (TTI) die Transportkanäle (TrCH) in Multiplexkanäle (CCTrCH) kombiniert werden, wobei erlaubte, kombinierte Transportformate (TFC) durch kombinierte Transportformat-Indikatoren (TFCI) identifiziert werden, **dadurch**
**gekennzeichnet,**
**dass** einem Multiplexkanal (CCTrCH) die Gruppe (MC1, MC2, MC3) zumindest für ein Zeitintervall (TTI) zugeordnet wird.

2. Verfahren nach Anspruch 1,
**dadurch gekennzeichnet,**
**dass** die Zuordnung mindestens einer Gruppe (MC1, MC2, MC3) zu einem Multiplexkanal (CCTrCH) durch Zuordnung eines Transportformat- Indikators (TFCI) zu der Gruppe (MC1, MC2, MC3) bewirkt wird, für den eine Zuordnungsinformation (CTFC) als Tabelle organisiert gespeichert wird.

3. Verfahren nach Anspruch 1,
**dadurch gekennzeichnet,**
**dass** die Zuordnung mindestens einer Gruppe (MC1, MC2, MC3) zu einem Multiplexkanal (CCTrCH) durch Zuordnung eines Transportformat- Indikators (TFCI) zu der Gruppe (MC1, MC2, MC3) bewirkt wird, für den eine Zuordnungsinformation (CTFC) als Liste organisiert gespeichert wird.

4. Verfahren nach einem der vorhergehenden Ansprüche,
**dadurch gekennzeichnet, dass** die Zuordnungsinformation (CTFC) derart gebildet wird, dass aus der Zuordnungsinformation für der Gruppe zugeordnete Funkkommunikationsgeräte einem ersten Algorithmus folgend die Kennzeichnung (TFC) ermittelbar ist.

5. Verfahren nach Anspruch 4,
**dadurch gekennzeichnet, dass** die Zuordnungsinformation (CTFC) derart gebildet wird, dass aufgrund der Zuordnungsinformation von den der Gruppe nicht angehörenden Funkkommunikationsgeräten einem ersten Algorithmus folgend während des Zeitintervalls (TTI) keine Transport Blöcke (TB) angenommen werden.

6. Verfahren nach einem der vorhergehenden Ansprüche,
**dadurch gekennzeichnet, dass**
a) alle Funkkommunikationsgeräte einer ersten Region einer ersten Gruppe zugeordnet werden,
b) die Gruppennachricht an zumindest dieser ersten Gruppe zugeordneten Funkkommunikationsgeräte, insbesondere als Broadcastnachricht, versendet wird.

7. Verfahren nach einem der vorhergehenden Ansprüche 1 bis 3, **dadurch gekennzeichnet, dass**
a) Funkkommunikationsgeräte zu mindestens einer Gruppe eingeschrieben werden,
b) die Gruppennachricht an alle Funkkommunikationsgeräte einer Gruppe, insbesondere als Multicastnachricht, versendet wird.

8. Verfahren nach einem der vorhergehenden Ansprüche,
**dadurch gekennzeichnet, dass** eine Zuweisung eines Übertragungszeitpunktes sowie Parameter der Gruppennachricht zu einer bestimmten Gruppe über einen den Transportkanälen (TrCH) zugeordneten gemeinsamen, insbesondere CCH, Kanal übertragen werden.

9. Netzwerkkontrolleinheit (UTRAN) zur Übertragung von mindestens einer Gruppennachricht an mindestens eine Gruppe (MC1. MC2, MC3) von ein oder mehreren Funkkommunikationsgeräten (UE1, UE2, UE3) in mindestens einer Funkzelle eines, insbesondere nach dem UMTS- Standard funktionierenden, Funkkommunikationsnetzwerks, **gekennzeichnet durch** Mittel zur Durchführung des Verfahrens nach einem der vorhergehenden Ansprüche.

## Claims

1. Method for transmitting at least one group message to at least one group (MC1, MC2, MC3) of one or a plurality of radio communication terminals (UE1, UE2, UE3) in at least one radio cell of a UMTS radio communication network, in which logical channels are mapped onto transport channels (TrCH) in the access layer (MAC), by way of which transport channels the transport blocks (TB) combined in the transport set (TBS) are transmitted, with the transport block set (TBS) being
**characterized by** the transport format (TF) and being identified by transport format indicators (TFI) and in which the transport channels (TrCH) are combined in multiplex channels (CCTrCH) in time intervals (TTI) in the physical layer, with explained, combined transport formats (TFC) being identified by combined transport format indicators (TFCI),
**characterized in that** the group (MC1, MC2, MC3) is assigned to a multiplex channel (CCTrCH) at least for one time interval (TTI).

2. Method according to claim 1,
**characterized in that** the assignment of at least one group (MC1, MC2, MC3) to a multiplex channel, (CCTrCH) is effected by assigning a transport format indicator (TFC1) to the group (MC1, MC2, MC3), for which an item of assignment information (CTFC), organized in table form, is stored.

3. Method according to claim 1,
**characterized in that** the assignment of at least one group (MC1, MC2, MC3) to a multiplex channel (CCTrCH) is effected by assigning a transport format indicator (TFCI) to the group (MC1, MC2, MC3), for which an item of assignment information (CTFC), organized in list form, is stored.

4. Method according to one of the preceding claims,
**characterized in that** the assignment information (CTFC) is configured such that the flag (TFC) can be determined from the assignment information for the radio communication devices assigned to the group according to a first algorithm.

5. Method according to claim 4,
**characterized in that** the assignment information CTFC) is configured such that based on the assignment information of the radio communication devices that are not part of the group, no transport blocks (TB) are assumed during the time interval (TTI) according to a first algorithm.

6. Method according to one of the preceding claims,
**characterized in that**
a) all radio communication devices of a first region are assigned to a first group,
b) the group message is sent to radio communication devices assigned at least to this first group, in particular in the form of a broadcast message.

7. Method according to one of the preceding claims 1 to 3,
**characterized in that**
a) radio communication devices are registered with at least one group,
b) the group message is sent to all radio communication devices of a group, in particular in the form of a multicast message.

8. Method according to one of the preceding claims,
**characterized in that** allocation of a transmission time and parameters of the group message are transmitted to a specific group via a common channel, in particular CCH, assigned to the transport channels (TrCH).

9. Network controller (UTRAN) for transmitting at least one group message to at least one group (MC1, MC2, MC3) from one or several radio communication devices (UE1, UE2, UE3) in at least one radio cell of a radio communication network functioning in particular according to the UMTS standard,
**characterized by** means for implementing the method according to one of the preceding claims.

## Revendications

1. Procédé pour transmettre au moins un message de groupe à au moins un groupe (MC1, MC2, MC3) d'un ou de plusieurs appareils de radiocommunication (UE1, UE2, UE3) dans au moins une cellule radio d'un réseau de radiocommunication UMTS, dans lequel, dans la couche d'accès (MAC), des canaux logiques sont représentés sur des canaux de transport (TrCH) via lesquels sont transmis des blocs de transport (TB) regroupés en sets de transport (TBS), les sets de blocs de transport (TBS) étant **caractérisés par** le format de transport (TF) et identifiés par des indicateurs de format de transport (TFI), et dans lequel, dans la couche physique, les canaux de transport (TrCH) sont combinés en canaux multiplex (CCTrCH) à intervalles de temps (TTI), des formats de transport combinés autorisés (TFC) étant identifiés par des indicateurs de format de transport combinés (TFCI), **caractérisé en ce que** le groupe (MC1, MC2, MC3) est affecté à un canal multiplex (CCTrCH) au moins pour un intervalle de temps (TTI).

2. Procédé selon la revendication 1,
**caractérisé en ce que** l'affectation d'au moins un groupe (MC1, MC2, MC3) à un canal multiplex (CCTrCH) est causée par affectation au groupe (MC1, MC2, MC3) d'un indicateur de format de transport (TFCI) pour lequel une information d'affectation (CTFC) est mémorisée sous forme organisée en tableau.

3. Procédé selon la revendication 1,
**caractérisé en ce que** l'affectation d'au moins un groupe (MC1, MC2, MC3) à un canal multiplex (CCTrCH) est causée par affectation au groupe (MC1, MC2, MC3) d'un indicateur de format de transport (TFCI) pour lequel une information d'affectation (CTFC) est mémorisée sous forme organisée en liste.

4. Procédé selon l'une quelconque des revendications précédentes,
**caractérisé en ce que** l'information d'affectation (CTFC) est formée de manière à ce que l'identification (TFC) est déterminable à partir de l'information d'affectation pour les appareils de radiocommunication affectés au groupe, suivant un premier algorithme.

5. Procédé selon la revendication 4,
**caractérisé en ce que** l'information d'affectation (CTFC) est formée de manière à ce qu'en raison de l'information d'affectation, aucun bloc de transport (TB) n'est accepté pendant l'intervalle de temps (TTI) par les appareils de radiocommunication n'appartenant pas au groupe, suivant un premier algorithme.

6. Procédé selon l'une quelconque des revendications précédentes,
**caractérisé en ce que**
a) tous les appareils de radiocommunication d'une première région sont affectés à un premier groupe,
b) le message de groupe est émis à des appareils de radiocommunication affectés au moins à ce premier groupe, notamment en tant que message de radiodiffusion.

7. Procédé selon l'une quelconque des revendications précédentes 1 à 3,
**caractérisé en ce que**
a) des appareils de radiocommunication sont inscrits à au moins un groupe,
b) le message de groupe est émis à tous les appareils de radiocommunication d'un groupe, notamment en tant que message multicast.

8. Procédé selon l'une quelconque des revendications précédentes,
**caractérisé en ce qu'** une attribution d'un moment de transmission ainsi que des paramètres du message de groupe sont transmis à un groupe déterminé par l'intermédiaire d'un canal commun, notamment CCH, affecté aux canaux de transport (TrCH).

9. Unité de commande réseau (UTRAN) pour la transmission d'au moins un message de groupe à au moins un groupe (MC1, MC2, MC3) d'un ou de plusieurs appareils de radiocommunication (UE1, UE2, UE3) dans au moins une cellule radio, d'un réseau de radiocommunication **caractérisé par** des moyens pour la réalisation du procédé selon l'une quelconque des revendications précédentes, réseau fonctionnant notamment suivant la norme UMTS.
